# EUROPEAN PATENT APPLICATION

(11) **EP 1 588 783 A1**
(43) Date of publication of application: **26.10.2005**
(21) Application number: 04009681.0
(22) Date of filing: 23.04.2004
(51) Int. Cl.: B09B 3/00

(54) **Process and apparatus for inactivating industrial waste**

(71) Applicant: KIPA Planung- und Vertriebs GmbH, 84032 Altdorf (DE)
(72) Inventor: The designation of the inventor has not yet been filed
(74) Representative: Pausch, Thomas Ernst

(57) **Abstract**

The present invention relates to a process and an apparatus for inactivating the industrial wastes (8) of ino silicate, phyllo silicate or other fibrous silicate minerals. Such minerals usually are embedded in a cement matrix of the industrial waste. The process consists in subjecting the industrial wastes of fibrous material to high power microwaves (13) to eliminate the H₂O and crystal water present in the waste materials (8) and to destroy the solid state structure of the crystallin asbetos fibers. According to the invention, the industrial wastes of fibrous silicate material is not just modified chemically, but is destroyed in its fibrous silicate's solid state characteristics, converting it into a chemically inert non-volatile product. There is no need for shredding or granulating the waste material before its inventive treatment. No expensive and complicated protection means against the danger of emitting fibers are necessary. The inventive process can be executed with relatively simple equipment and thoroughly without any pollution problem, and is capable of giving the greatest assurances of reliability and safety. The invention provides a process which allows to obtain products which may be easily recycled and used in other industrial fields.

## Description

The present invention relates to a process and an apparatus for inactivating the industrial waste including crystalline or semicrystalline material containing H₂O or crystal water, for example ino silikate, phyllo silikate or other fibrous silicate minerals. Such minerals usually are embedded in a cement matrix of the industrial waste (also known as cumming-tonit asbestos).

Due to its acid-resistant, fireproof and scarcely heat-conducting properties, fibrous silicate such as serpentine and amphibole and similar material is used extensively in industrie for a large number of articles, such as cardboard, cloth, ropes, gaskets, filters, fabrics and sheets for protective purposes and for paving. Furthermore, such material is used in considerable amounts as a construction material, mixed with cement, to manufacture corrugated slabs for roofings, flat slabs for coverings, ceilings and partitions, pipes for irrigation ines, for sewers, for flues, hoods and the like.

In practice, all the described workings produce a considerable amount of wastes or scrap which must be conveniently disposed of. A severe problem which arises resides in the fact that fibrous silicate breaks by rubbing, friction or wear, releasing very light and volatile fibers which may easily be inhaled. The danger of such fibers absorbed by inhaling has been known for a long time, since it can cause severe pathologies which may be schematically summarized as asbestosis (pulmonary fibrosis limiting breathing), lung cancer, pleural mesotheliomas and others. The only disposal system currently used is that of taking said scrap to controlled landfills, where means are provided to prevent the diffusion into the atmosphere of the inhalable fibers which can be emitted by fibrous silicates. This method, besides being considerably expensive, does not radically solve the problem, since the potential danger of fibrous material persists and pollution phenomena may therefore occur, caused by factors which may in any manner elude the protective features which should be provided at the landfill.

There have been also efforts to chemically converting the fiber material into non-polluting material, partly by subjecting the waste material to heating at temperatures higher than 600° C. With such a method, the fibrous silicate may chemically be converted into forsterite that may be usable as filler or construction material. However, even this method, besides being not very effective, does not solve the problem, since the material to be treated chemically has to be shredded or granulated before its heat and chemical treatment, as only the surface of the material could be subjected with such method. As a result, such method still causes expensive and complicated protection means against the danger of emitting fibers.

The object of the present invention is to eliminate the above mentioned disadvantages by providing a process for inactivating industrial wastes including crystalline or semicrystalline material containing H₂O or crystal water, in particular fibrous silicate material, which allows to modify or destroy fibrous silicate's chemical characteristics, converting it into a chemically inert non-volatile product. The inventive process should be executed with relatively simple equipment and thoroughly without any pollution problem, and should be capable of giving the greatest assurances of reliability and safety. A further object of the invention is to provide a process which allows to obtain products which can be easily recycled and used in other industrial fields.

This object is solved by a process according to claims 1 and an apparatus according to claim 8, and by a product according to claim 11.

This aim and objects are achieved by a process for inactivating the industrial waste including crystalline or semicrystalline material which is at least partially capable of absorbing microwave energy, and in particular contains H₂O or crystal water, said material comprising in particular ino silicate, phyllo silicate or other fibrous silicate minerals, according to the invention, characterized in that it consists in subjecting the industrial wastes to high power microwaves to explosive-like convert the H₂O and crystal water present in the crystalline or semicrystalline material of the industrial waste into the vapor phase and to destroy the solid state structure of the crystallin or semicrystalline material, thereby converting the polluting material of the industrial waste into a harmless amorph or perished material. According to the invention, the industrial waste of crystalline or semicrystalline material is not just modified chemically, but is destroyed in its solid state characteristics, converting it into a chemically inert non-volatile product. There is no need for shredding or granulating the waste material before its inventive treatment. No expensive and complicated protection means against the danger of emitting fibers are necessary. The inventive process allows for a continous mode of operation and can be executed with relatively simple equipment and thoroughly without any pollution problem, and is capable of giving the greatest assurances of reliability and safety. The invention provides a process which allows to obtain products which may be easily recycled and used in other industrial fields.

Following the inventive method, the subjecting of the waste material by the microwaves is performed through reflexions and refractions of the microwaves within the lattice structures of said crystalline or semicrystalline waste material, in particular through reflexions and refractions of the waves within the tetraeder or other solid state structures, chains or bands existing on the three or more edges at neighbor tetraeders of the crystal structures, and generating hot spots by a super heating effect due to the impact of the high frequency waves within the lattice structures, resulting in a super heating of the tetraeders or other crystal structures and a sudden increase of vapor pressure within the lattice structures, converting the H₂O and crystal water present in the crystalline or semicrystalline material of the industrial waste into the vapor phase, followed by an expansive and explosive acting pressure destroying the lattice structures explosive-like.

Furthermore, the high power microwaves are impacted deeply into the waste material and the waste material is destroyed from internal to external through the deep impact of the high power micro waves. When compared with conventional methods wherein only the surface of the material is heated, the invention provides a deep energy impact of the microwaves into the internal of the waste material. The rapidly changing electromagnetic field of the microwaves brings the water molecules due to its dielectric molecular structure into rotation, resulting in a rapid heating of the water. As all of the volume of the waste material is heated similtaneously, the temperature in the internal material increases much higher than the temperature at the surface of the material facing the colder ambience. This effect is advantegous, as the surface of the material will be protected against heating, and the heating is more rapidly increased within the internal of the material.

As the microwaves are spreaded with light velocity, the energy penetrates into the internal of the material immediately after switching on the microwave source, starting at once the heating. When switching off the microwave source, heating stops instantly. There are no long times for heating up or cooling down the microwave source. Non-polar material like the embedding cement do not absorb any microwave energy and is not heated.

Preverably the frequency of the high power microwaves is between 915 MHz and 30 GHz. Depending on national microwave technology conditions, only few frequency ranges are possible. The highest frequency possible at the moment is 30 GHz.

The lowest frequency of 915 MHz involves more technical investigation and may only be used in certain applications. From technological and price reasons, a frequency around 2,45 GHz is most preverable.

According to a prefered aspect of the invention, the process is determined for destroying column-like, needle-like or fibrous molecular structures embedded in a cement matrix of industrial waste material.

An apparatus for inactivating industrial waste including crystalline or semicrystalline material containing H₂O or crystal water in accordance with the invention is characterized by a chamber comprising an input means for loading the chamber with said industrial waste, a conveying means for transporting the industrial waste through the chamber, and an output means for discharging the industrial waste after treatment; and a microwave source means arranged inside the chamber for subjecting the industrial wastes transported through the chamber to high power microwaves to explosive-like convert the H₂O and crystal water present in the crystalline or semicrystalline material of the industrial waste into the vapor phase and to destroy the solid state structure of the crystallin or semicrystalline material, thereby converting the polluting material of the industrial waste into a harmless amorph or perished material.

In a preferred embodiment of the invention, a number of microwave sources are mounted spiral-like around the longitudinal axis of the chamber.

In order to ensure a better regularity of the microwave field inside the chamber, a secondary source means in the form of slot antennas may additionally be provided inside the chamber.

According to a further aspect of the invention, the produced product is applied physiologically and ecologically as lime or cement substitute and the produced product having similar hydraulical characteristics as lime or cement substitute.

Further details and features of the process according to the invention are disclosed in the further subclaims.

In the description that follows, the invention is described in detail with references to an exemplary embodiment illustrated in the drawing, in which
- Figure 1: is a sectional side view showing the microwave apparatus according to an embodiment of the present invention; and
- Figure 2: is a sectional front view of the microwave apparatus.

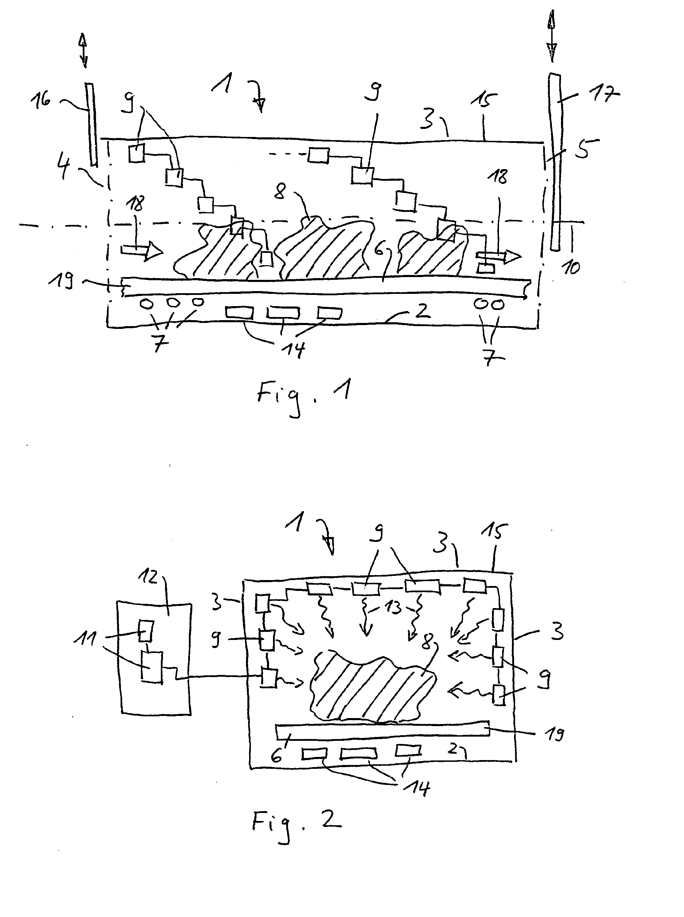

In accordance with the exemplary embodiment of the invention shown schematically in the Figures 1 and 2, identical reference numerals represent identical or similar features in different views.

The Figures show a microwave apparatus 1 having a chamber 15 consisting of a basis support 2 and side walls 3 made from steel, the chamber 15 can be opened at an input side 4 and an output side 5. The chamber may have at least one chamber door for introducing or discharging the material 8 to be treated. In the preferred embodiment as shown in Fig. 1 and 2, the chamber 15 comprises at least two doors 16, 17 arranged oppositely to each other with respect to the progression path 18 extending between said doors 16, 17. The chamber 15 houses a conveying means 19 having a transport band 6 preferably made from metal and supported on rollers 7. The apparatus 1 could be assembled by a number of single moduls and has a total length of about 45 m and a total maximum width of about 3 m. The waste 8 to be treated is inputted at the input 4, transported by said conveying means 19 through the apparatus 1, and outputted at the output 5.

A number of microwave sources 9 are mounted spiral-like around the longitudinal axis 10 of the chamber, in order to provide a regular distribution of the microwave field inside the chamber. In the preferred embodiment, a number of 12 to 18 magnetrons serving as microwave sources are arranged around the chamber 15. The magnetrons 9 are electrically powered and controlled by circuit components 11 included in a cabinet 12 arranged outside of the chamber. The circuit components may be mechanically and electrically screened by the walls of the cabinet 12. The microwaves emitted by the magnetrons 9 are directed into the chamber 15, as shown schematically by the arrows 13. In order to ensure a better regularity of the microwave field inside the chamber, a secondary source means in the form of slot antennas 14 may additionally be provided inside the chamber, for example at the basis support 2 as shown in Fig. 1. The secondary source means enable a further concentration and direction of the microwave radiation into the chamber 15.

The apparatus allows a continous mode of operation for inactivating the industrial waste 8 including crystalline or semicrystalline material containing H₂O or crystal water (material being at least partially capable of absorbing microwave energy). The material to be treated is exposed to a common microwave field for a time and/or with an intensity being sufficient for explosive-like converting the H₂O and crystal water present in the crystalline or semicrystalline material of the industrial waste into the vapor phase and to destroy the solid state structure of the crystallin or semicrystalline material, thereby converting the polluting material of the industrial waste into a harmless amorph or perished material. In particular, subjecting of the waste material 8 by the microwaves 13 is performed through reflexions and refractions of the microwaves within the lattice structures of said crystalline or semicrystalline waste material, and through generating hot spots by a super heating effect due to the impact of the high power microwaves within the lattice structures, resulting in a super heating of the crystal or semicrystal lattice structures and a sudden increase of vapor pressure within the lattice structures, converting the H₂O and crystal water present in the crystalline or semicrystalline material of the industrial waste into the vapor phase, followed by an expansive and explosive acting pressure destroying the lattice structures explosive-like. Moreover, said high power microwaves 13 are impacted deeply into the waste material 8 and the waste material 8 is destroyed from internal to external through the deep impact of the high power micro waves.

The product produced by the process according to the invention is applied physiologically and ecologically as lime or cement substitute, wherein the produced product has similar hydraulical characteristics as lime or cement substitute.

## Claims

1. Process for inactivating industrial waste (8) including crystalline or semicrystalline material containing H₂O or crystal water, **characterized in that** it consists in subjecting the industrial wastes to high power microwaves (13) to explosive-like convert the H₂O and crystal water present in the crystalline or semicrystalline material of the industrial waste into the vapor phase and to destroy the solid state structure of the crystallin or semicrystalline material, thereby converting the polluting material of the industrial waste into a harmless amorph or perished material.

2. Process according to claim 1, **characterized in that** the subjecting of the waste material (8) by the microwaves (13) is performed through reflexions and refractions of the microwaves within the lattice structures of said crystalline or semicrystalline waste material, and through generating hot spots by a super heating effect due to the impact of the high power microwaves within the lattice structures, resulting in a super heating of the crystal or semicrystal lattice structures and a sudden increase of vapor pressure within the lattice structures, converting the H₂O and crystal water present in the crystalline or semicrystalline material of the industrial waste into the vapor phase, followed by an expansive and explosive acting pressure destroying the lattice structures explosive-like.

3. Process according to claim 1 or 2, **characterized in that** said high power microwaves (13) are impacted deeply into the waste material and the waste material (8) is destroyed from internal to external through the deep impact of the high power micro waves.

4. Process according to any of the previous claims, **characterized in that** the forms of the treated crystalline or semicrystalline material of the industrial waste (8) are column-like, needle-like or fibrous, and the total solid state structure of the crystalline or semicrystalline material is destroyed by a very quick heating and by converting the H₂O and crystal water into the vapour phase, followed by an expansive and explosive acting pressure.

5. Process according to any of the previous claims, **characterized in that** the crystalline or semicrystalline material of the industrial waste (8) is embedded in a cement matrix of the industrial waste.

6. Process according to any of the previous claims, **characterized in that** the crystalline or semicrystalline material of the industrial waste (8) comprises ino silicate, phyllo silicate or other fibrous silicate minerals.

7. Process according to any of the previous claims, **characterized in that** the frequency of the high power microwaves (13) is between 915 MHz and 30 GHz.

8. Apparatus for inactivating industrial waste (8) including crystalline or semicrystalline material containing H₂O or crystal water, **characterized by**
a chamber (15) comprising an input means (4) for loading the chamber (15) with said industrial waste (8), a conveying means (19, 6, 7) for transporting the industrial waste (8) through the chamber (15), and an output means (5) for discharging the industrial waste (8) after treatment;
a microwave source means (9) arranged inside the chamber (15) for subjecting the industrial wastes (8) transported through the chamber (15) to high power microwaves (13) to explosive-like convert the H₂O and crystal water present in the crystalline or semicrystalline material of the industrial waste (8) into the vapor phase and to destroy the solid state structure of the crystallin or semicrystalline material, thereby converting the polluting material of the industrial waste into a harmless amorph or perished material.

9. Apparatus according to claim 8, **characterized in that** a number of microwave sources (9) are mounted spiral-like around the longitudinal axis (10) of the chamber (15).

10. Apparatus according to claim 8 or 9, **characterized in that** a secondary source means (14), in particular at least one slot antenna is provided inside the chamber (15).

11. Product produced by the process according to any of the previous claims, **characterized in that** the produced product is applied physiologically and ecologically as lime or cement substitute and the produced product having similar hydraulical characteristics as lime or cement substitute.
